# EUROPEAN PATENT APPLICATION

(11) **EP 2 733 593 A2**
(43) Date of publication of application: **21.05.2014**
(21) Application number: 13184443.3
(22) Date of filing: 13.09.2013
(51) Int. Cl.: G06F 3/0488

(54) **Method and electronic device for providing virtual keyboard**

(30) Priority: 14.11.2012 KR 20120128683
(71) Applicant: Samsung Electronics Co., Ltd, Gyeonggi-do 443-742 (KR)
(72) Inventor: Chun, Jin-Wook, Seoul (KR)
(74) Representative: Gover, Richard Paul

(57) **Abstract**

An electronic device and a method for providing a virtual keyboard are provided. The method includes displaying a three-dimensional (3D) object in a shape of a polyhedron having surfaces to which different switch targets are respectively allocated; rotating the 3D object according to a direction and distance of an input flicking; and activating, in response to the rotation of the 3D object, one of surfaces of the polyhedron that is most widely projected.

## Description

### BACKGROUND OF THE INVENTION

### 1. Field of the Invention

The present invention relates to a virtual keyboard in an electronic device.

### 2. Description of the Related Art

In mobile devices such as smart phones, touch screen type input units are commonly used. Due to characteristics of touch screens that do not include physical keys, a soft key virtual keyboard is widely used as an input means. However, due to size constraints in mobile devices for portability, the number of key buttons that may be simultaneously presented on the virtual keyboard is limited.

The input means of most current virtual keyboards includes a two-dimensional (2D) button to which a specific value is allocated. Thus, a user operates each button through a tap and release, so as to input a value that is allocated to that button. In order to input an additional derivative value through a key in a current virtual keyboard, (i.e., another value in addition to a value allocated to the key), a user must press another key as a function key (e.g., a shift key) or press a button in a popup window that is displayed after the key is pressed for a predetermined time.

In addition, numbers, Hangul, alphabets, and special characters are generally presented on different keyboards. Accordingly, separate buttons (e.g., a Korean/English switch button or a number/ symbol switch button) may be defined for switching between keyboards. Accordingly, a user may select a desired type of a keyboard by using the separate button and then input a desired value.

As described above, various techniques such as providing an additional function key, a popup window, etc. are presented in order to overcome limits on the size of the touch screen in mobile devices. However, current techniques typically require allocation of additional buttons or waiting for an input from a user. Thus, there is a need for a more convenient and effective key input technique in the virtual keyboard environment.

### SUMMARY OF THE INVENTION

An aspect of the present invention is to substantially address at least the above-described problems and/or disadvantages and to provide at least the advantages below. Accordingly, an aspect of the present invention is to provide a method and electronic device for supporting a more convenient and effective key input technique in a virtual keyboard environment.

Another aspect of the present invention is to provide a method and electronic device for providing a more user-friendly experience in the virtual keyboard environment.

Another aspect of the present invention is to provide a method and electronic device for supporting more input values in the virtual keyboard environment with a limited number of buttons.

Another aspect of the present invention is to provide a method and electronic device for inputting a key value by using a 3D object in the virtual keyboard environment.

Another aspect of the present invention is to provide a method and electronic device for inputting a key value by using rotation of the 3D in the virtual keyboard environment.

Another aspect of the present invention is to provide a method and electronic device for changing a key value according to the rotation of the 3D object in the virtual keyboard environment.

Another aspect of the present invention is to provide a method and electronic device for changing a keyboard type according to the rotation of the 3D object in the virtual keyboard environment.

Another aspect of the present invention is to provide a method and electronic device for changing language to be provided by keyboards according to the rotation of the 3D object in the virtual keyboard environment.

According to an aspect of the present invention, a method of an electronic device is provided. The method includesdisplaying a three-dimensional (3D) object in a shape of a polyhedron having surfaces to which different switch targets are respectively allocated; rotating the 3D object according to a direction and distance of an input flicking; and activating, in response to the rotation of the 3D object, one of surfaces of the polyhedron that is most widely projected.

According to another aspect of the present invention, an electronic device is provided. The electronic device includes a display unit displaying a three-dimensional (3D) object in a shape of a polyhedron having surfaces to which different switch targets are respectively allocated; and a processor rotating the 3D object according to a direction and distance of an input flicking, and activating, in response to the rotation of the 3D object, one of surfaces of the polyhedron that is most widely projected.

According to another aspect of the present invention, an electronic device is provided. The electronic device includes at least one processor; a memory operating with a clock frequency provided from the at least one processor; and at least one module in the memory, wherein the module is configured to store at least one command to be performed by the at least one processor, and the at least one command includes at least one command to display a three-dimensional (3D) object in a shape of a polyhedron having surfaces to which different switch targets are respectively allocated, to rotate the 3D object according to a direction and distance of an input flicking, and to activate, in response to the rotation of the 3D object, one of surfaces of the polyhedron that is most widely projected.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram illustrating how an activated surface of a 3D object is determined in an electronic device according to an embodiment of the present invention;
FIGs. 2A-2E are diagrams illustrating an example of switching a virtual keyboard in an electronic device according to an embodiment of the present invention;
FIG. 3 is a flow chart illustrating a keyboard switching procedure according to an embodiment of the present invention;
FIGs. 4A-4F are diagrams illustrating an example of switching a virtual keyboard in an electronic device according to another embodiment of the present invention;
FIGs. 5A-5E are diagrams illustrating an example of switching a virtual keyboard in an electronic device according to another embodiment of the present invention;
FIGs. 6A-6E are diagrams illustrating an example of switching a virtual keyboard in an electronic device according to another embodiment of the present invention;
FIGs. 7A-7F are diagrams illustrating an example of switching a virtual keyboard in an electronic device according to another embodiment of the present invention;
FIGs. 8A-8D are diagrams illustrating an example of switching a key value of a virtual keyboard in an electronic device according to an embodiment of the present invention;
FIG. 9 is a flow chart illustrating a method of an electronic device according to an embodiment of the present invention;
FIG. 10 is a diagram illustrating an example of simultaneously switching a virtual keyboard and switching a key value in an electronic device according to an embodiment of the present invention;
FIG. 11 is a flow chart illustrating a procedure of determining the switch of a keyboard and that of a key value according to an embodiment of the present invention;
FIG. 12 is a flow chart illustrating a method of an electronic device according to an embodiment of the present invention;
FIG. 13 is a block diagram illustrating an electronic device according to an embodiment of the present invention; and
FIG. 14 is a block diagram illustrating an electronic device according to another embodiment of the present invention.

### DETAILED DESCRIPTION OF EMBODIMENTS OF THE PRESENT INVENTION

Technology for providing a virtual keyboard based input means using a 3D object in an electronic device is described as follows. The present invention relates to a method and an electronic device for providing a three-dimensional object including a virtual keyboard.

In the following description, an electronic device may be a portable electronic device, such as a smart phone, a portable terminal, a mobile phone, a mobile pad, a media player, a tablet computer, a handheld computer, or a Personal Digital Assistant (PDA), for example. Alternatively, an electronic device may be a device in which functions of two or more of the above-described devices are combined. That is, an electronic device, as described herein, may include one or more of the above-described devices and/or a device that includes an input unit that does not have a fixed shape, such as a touch screen.

A command to control a virtual keyboard according to an embodiment of the present invention is described as follows.

According to an embodiment of the present invention, a user may input a key value from the virtual keyboard through a tap, flick, and/or release in order to switch the keyboard or the key value. Herein, a tap refers to a touch by pointing, such as that performed through a user's fingers, for example. For example, when using a touch screen, the tap is performed, for example, when at least one of a user's fingers is in contact with the surface of the touch screen, and thus the virtual keyboard may recognize the point of contact. The flicking is performed, for example, when a user moves a point that is pointed to by the user. Since the flicking is a movement of the point, the flicking includes a direction and a distance. A release is performed when a tap is cancelled, in other words, the pointing point disappears. The pointing point disappearing refers to removal of a user's finger or other corresponding touch input.

In the following description, the tap, flicking and the release are used in the manner described above. However, terms other than tap, flicking, and the release may also be used to refer to the above-described user operations.

A virtual keyboard according to an embodiment of the present invention provides a plurality of keyboards. The plurality of keyboards includes language keyboards, number keyboards, and special character keyboards, and the languages applied to the language keyboards may include at least two of Korean, English, Japanese and Chinese, for example. According to a typical technology, switching between the keyboards is performed by pressing a button that is defined for the switching. However, with respect to a virtual keyboard according to an embodiment of the present invention, the switch between the keyboards is performed by rotation of a polyhedron. More specifically, a virtual keyboard according to an embodiment of the present invention has a polyhedron shape and is configured as a rotatable 3D object having different sides to which different respective keyboards are allocated.

A switch of a 3D object-based keyboard according to an embodiment of the present invention is performed by activating one surface of the polyhedron. If a user taps any point on the keyboard or a point in a specific region that is allocated for the switch of the keyboard, the electronic device displays a polyhedron-shaped 3D object. While the 3D object is displayed, the user maintains the tap and performs flicking to rotate the polyhedron. In this case, the direction and angle of rotation are determined according to the direction and distance of the flicking. For example, the polyhedron may rotate in the same direction as that of the flicking, and rotate through an angle proportional to the flicking distance of the user. According to an embodiment of the present invention, an electronic device projects a rotating view of the polyhedron. In this case, the electronic device activates one of the surfaces of the projected polyhedron that is most widely projected on a screen. Then, if a tap is released, the electronic device enables a keyboard to be used, the keyboard being allocated to the surface activated at the time of release.

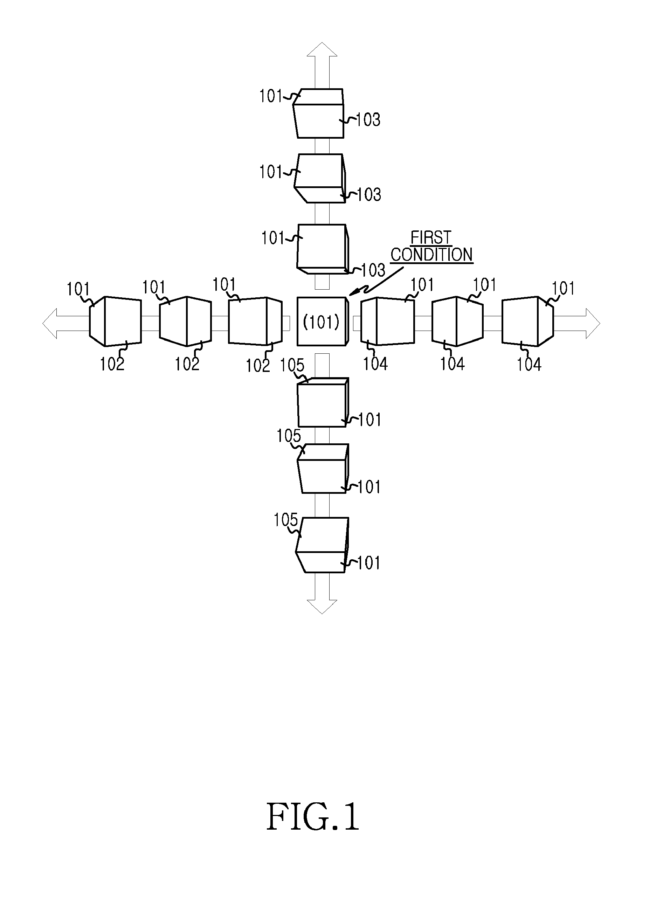

For example, when the polyhedron is a hexahedron, the activation of one surface may be performed as illustrated in FIG. 1. FIG. 1 is a diagram illustrating how an activated surface of a 3D object is determined in an electronic device according to an embodiment of the present invention. FIG. 1 depicts horizontal and vertical rotation of a hexahedron-shaped 3D object.

Referring to FIG. 1, a first surface 101 of the 3D object is initially displayed at a full width/height, and therefore displayed with a largest display area. A second surface 102 is connected to the right side of the first surface 101. The second surface 102 is displayed with a gradually increasing display area, if the 3D object rotates to the left, and the second surface 102 is activated as soon as the second surface 102 is projected with a greater display area than a displayed area the first surface 101. Likewise, a third surface 103 that is connected to the lower side of the first surface 101 is displayed with a gradually increasing display area if the 3D object rotates upward, and the third surface 103 is activated as soon as the displayed area of third surface 103 is greater than the displayed area of first surface 101. In addition, a fourth surface 104, which is connected to the left side of the first surface 101, is displayed with a gradually increasing display area if the 3D object rotates to the right, and the fourth surface 104 is activated as soon as the fourth surface 104 is displayed with a greater display area than a display area of the first surface 101. In addition, a fifth surface 105, which is connected to the upper side of the first surface 101, is displayed with a gradually increasing display area if the 3D object rotates downward, and the fifth surface 105 is activated as soon as the display area of the fifth surface 105 is greater than the displayed area of the first surface 101.

Although not shown in FIG. 1, a sixth surface, which is positioned along a back side of the 3D object opposite the first surface 101, may also be activated as soon the sixth surface is displayed at a display area greater than display areas of the other surfaces. In addition, although FIG. 1 only shows rotation of the 3D object to the right, to the left, downward, and upward, the 3D object may also rotate diagonally. According to this embodiment of the present invention, a surface that is most widely projected (i.e., displayed with a greater display area than display areas of other surfaces of the 3D object) is activated. The electronic device may be visualized to distinguish the most widely projected surface from other surfaces, which enables a user to recognize an activated surface. For example, the most widely projected surface may be displayed by using a change in color, shade, etc.

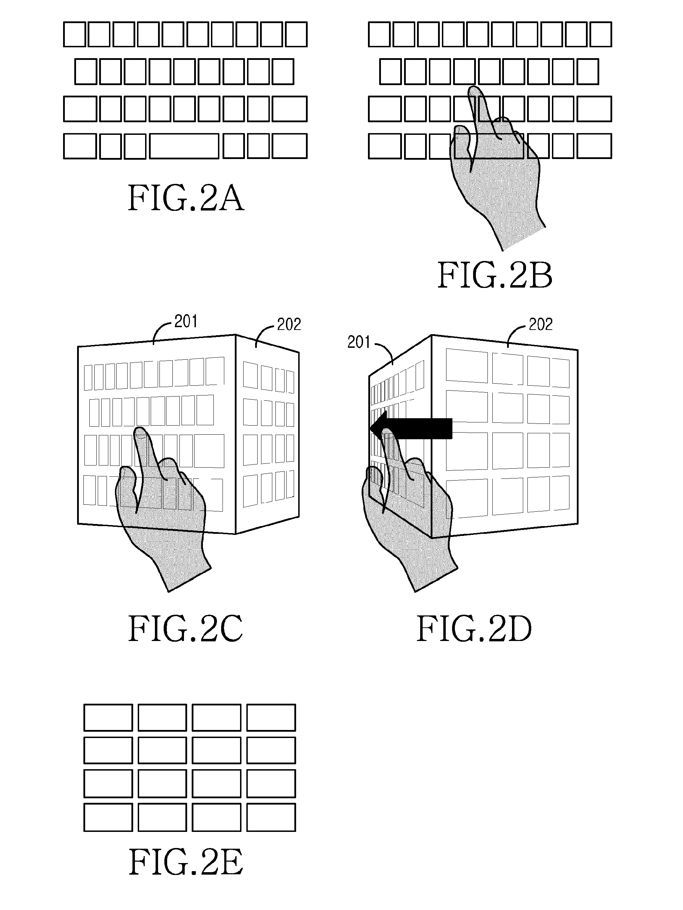

FIGs. 2A-2E are diagrams illustrating an example of switching a virtual keyboard in an electronic device according to an embodiment of the present invention. FIGs. 2A-2E show a switch from a first keyboard to a second keyboard. For example, the first keyboard may be an English keyboard and the second keyboard may be a number keypad.

Referring to FIGs. 2A-2E, the electronic device displays the first keyboard, as shown in FIG. 2A. Accordingly, a user may input a desired key value by using the first keyboard. If the user performs a tap as shown in FIG. 2B, a 3D object having surfaces to which different keyboards are allocated is displayed, as shown in FIG. 2C. A first surface 201 to which the first keyboard is allocated is most widely displayed (i.e., displayed with a greater display area than display areas of other surfaces of the 3D object). In this case, various techniques may be used so that input for initiating display of the 3D object is distinguished from input for inputting a key value of a specific button. For example, when the point where the tap is performed is within a region where no buttons are displayed, the electronic device may display the 3D object. As another example, if the tap is maintained for a time that is at least equal to a predefined time, the electronic device may display the 3D object. Subsequently, as the user flicks to the left while maintaining the tap as shown in FIG. 2D, the 3D object also rotates to the right. In addition, the most widely projected surface is changed to a second surface 202 due to the rotation. Subsequently, if the tap is released, a second keyboard that is allocated is displayed on the second surface 202 that is most widely displayed at the time of release. Accordingly, the user inputs a desired key value by using the second keyboard.

In the embodiment as shown in FIG. 2, the first and the second keyboards include a different number of buttons. However, this example is merely provided to easily distinguish between the two keyboards. Accordingly, the number of buttons of the first keyboard may be the same as that of buttons of the second keyboard in accordance with embodiments of the present invention. In addition, the numbers and arrangements of buttons of the first and the second keyboards may be different from those of FIG. 2.

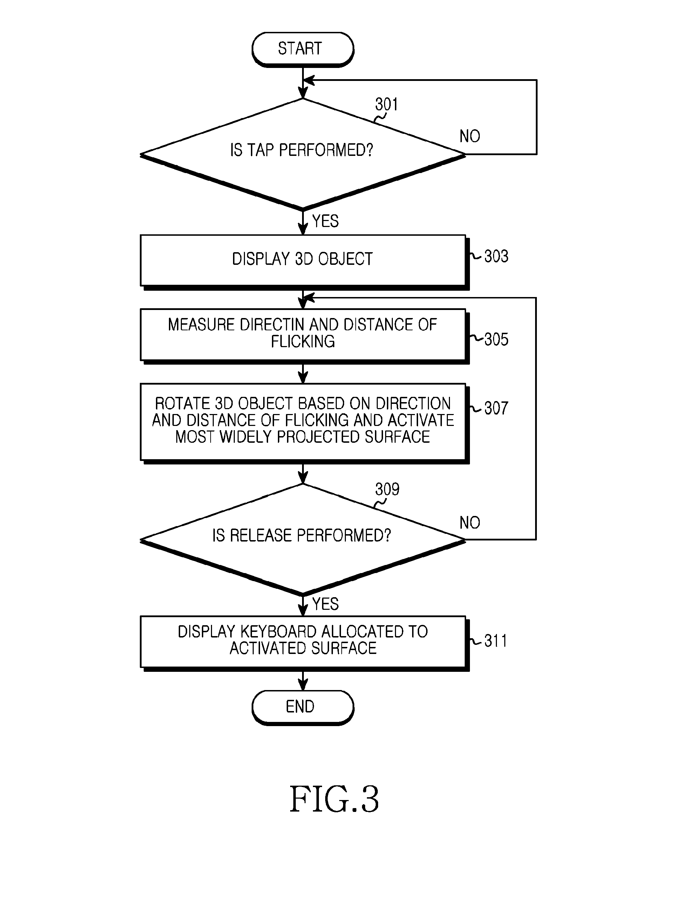

FIG. 3 is a flowchart illustrating a keyboard switching procedure according to an embodiment of the present invention. More specifically, FIG. 3 is a flowchart illustrating an method performed by the electronic device for the embodiment of present invention described with reference to FIG. 2.

Referring to FIG. 3, the electronic device determines whether a user inputs a tap, in step 301. More specifically, the electronic device determines whether there is a command for displaying a 3D object. In another example according to embodiments of the present invention, the command for displaying the 3D object may be a tap that is maintained at a point for a time that is at least equal a certain critical time.

Upon a determination that the tap is performed, the electronic device proceeds to step 303, and displays the 3D object. The 3D object has a plurality of surfaces. For example, the 3D object may be a hexahedron. The 3D object has a shape of a polyhedron to surfaces of which different types of keyboards (e.g., Korean and English keyboards, a number keypad, a special character keyboard, etc.) are respectively allocated.

Subsequently, the electronic device proceeds to step 305 and measures the direction and distance of the flicking performed by the user. More specifically, the electronic device measures a moving vector and a moving distance by a movement of a point corresponding to the user's input. If flick is not performed or the pointing point does not move from the initial tapping point, the vector does not exist and therefore, the measured distance is zero.

Subsequently, the electronic device proceeds to step 307, rotates the 3D object based on the direction and distance of the flicking, and activates the most widely projected surface. For example, the rotation direction of the 3D object may match the direction of the flicking, and the rotation angle may be proportional to the distance of the flicking. In addition, the electronic device may visually distinguish the most widely projected surface from other surfaces, which enables a user to recognize an activated surface. For example, the most widely projected surface may be distinguished from other surfaces by using a change in color, shade, etc.

Subsequently, the electronic device proceeds to step 309 and determines whether an input release is performed (e.g., a user's touch input on a touch screen is removed). If the input release is not performed, the electronic device repetitively performs steps 305 and 307.

If the input release is performed, the electronic device proceeds to step 311 and displays an allocated keyboard on an activated surface. More specifically, the electronic device enables use of the keyboard that was activated at the time of the input release.

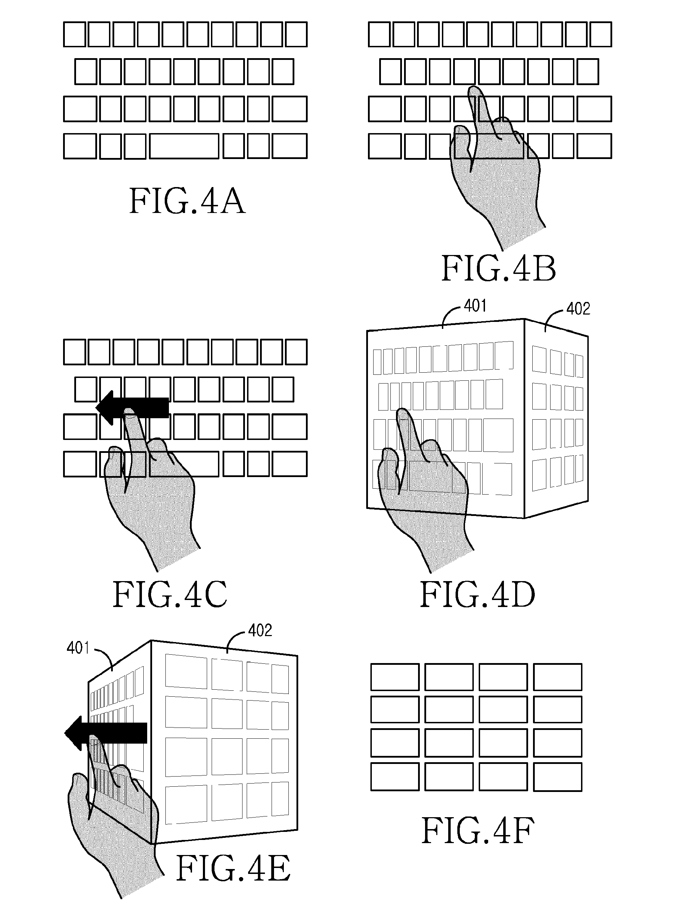

FIGs. 4A-4F illustrate an example of switching a virtual keyboard in an electronic device according to another embodiment of the present invention. More specifically, FIGs. 4A-4F show switching from a first keyboard to a second keyboard. For example, the first keyboard may be an English keyboard, and the second keyboard may be a number keypad.

Referring to FIG. 4, the electronic device displays the first keyboard, as shown in FIG. 4A. Accordingly, a user may input a desired key value by using the first keyboard. In this case, if the user performs a tap, as shown in FIG. 4B, and flicking is performed while the tap is maintained, as shown in FIG. 4C, a 3D object having surfaces to which different keyboards are allocated is displayed, as shown in FIG. 4D. Unlike the embodiment described with reference to FIGs. 2A-2E where the 3D object is displayed in response to a tap input, according to the embodiment of FIG. 4, the 3D object is displayed according to a combination of a tap and flicking. The particular combination of the tap and flicking that enables the display of the 3D object may vary. For example, an embodiment of the present invention may require that the difference between the tap time and the flicking time is less than a specific critical value, or require that the distance of the flicking must be greater than a specific critical value. In the present example, a first surface 401 to which the first keyboard is allocated is most widely displayed. Subsequently, as the user flicks to the left while maintaining the tap, as shown in FIG. 4E, the 3D object also rotates to the right. In addition, the most widely projected surface is changed to a second surface 402 due to the rotation. Subsequently, if the tap is released, a second keyboard that is allocated is displayed on the second surface 402, which is the most widely displayed surface of the 3D object at the time of release. Accordingly, the user may input a desired key value by using the second keyboard.

In the embodiment as shown in FIGs. 4A-4E, each of the first and the second keyboards include a number of buttons and the number of buttons of the first keyboard is different from that of buttons of the second keyboard. However, this example is merely provided to easily distinguish these keyboards from each other. Thus, the number of buttons of the first keyboard may be the same as that of buttons of the second keyboard in accordance with embodiments of the present invention. In addition, the numbers and arrangements of buttons of the first and the second keyboards may be different from those of FIG. 4 in accordance with embodiments of the present invention.

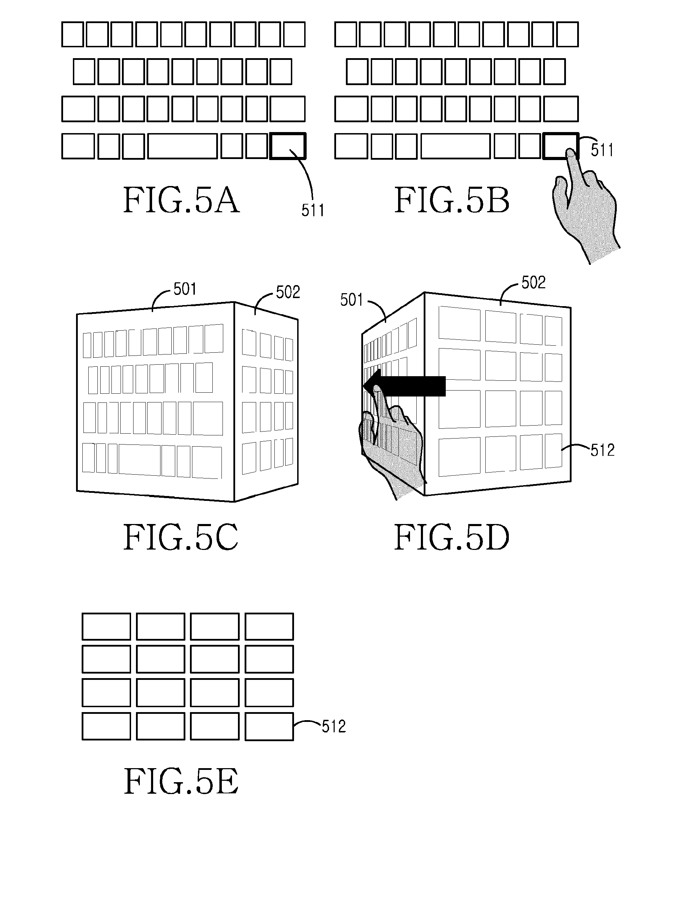

FIGs. 5A-5E are diagrams illustrating an example of switching a virtual keyboard in an electronic device according to another embodiment of the present invention. FIGs. 5A-5E show switching from a first keyboard to a second keyboard. For example, the first keyboard may be an English keyboard, and the second keyboard may be a number keypad.

Referring to FIGs. 5A-5E, the electronic device displays the first keyboard, as shown in FIG. 5A. Accordingly, a user may input a desired key value by using the first keyboard. The first keyboard includes a special button 511 for switching the keyboard. If the user taps and releases the special button 511, as shown in FIG. 5B, a 3D object having surfaces to which different keyboards are allocated is displayed, as shown in FIG. 5C. Unlike the embodiment described with reference to FIGs. 2A-2E, where the 3D object is displayed in response to an input tap and the embodiment described with reference to FIGs. 4A-4F, where the 3D object is displayed with the combination of the tap and flicking, the embodiment of FIG. 5 displays the 3D object by using a separate button. A first surface 501, to which the first keyboard is allocated, is most widely displayed. Subsequently, as the user flicks to the left while maintaining the tap, as shown in FIG. 5D, the 3D object also rotates to the left. In addition, the most widely projected surface is changed to a second surface 502 due to the rotation. The second button that is displayed on the second surface 502 also includes a special button 512 for switching the keyboard. Subsequently, if the tap is released, the second keyboard, which is allocated on the second surface 502 that is most widely displayed at the time of release, is displayed. Accordingly, the user may input a desired key value by using the second keyboard.

In the embodiment as shown in FIGs. 5A-5E, each of the first and the second keyboards include a number of buttons and the number of buttons of the first keyboard is different from that of buttons of the second keyboard. However, this example is merely provided to easily distinguish the keyboards from each other. Thus, the number of buttons of the first keyboard may be the same as that of buttons of the second keyboard. In addition, the numbers and arrangements of buttons of the first and the second keyboards may be different from those of FIG. 5.

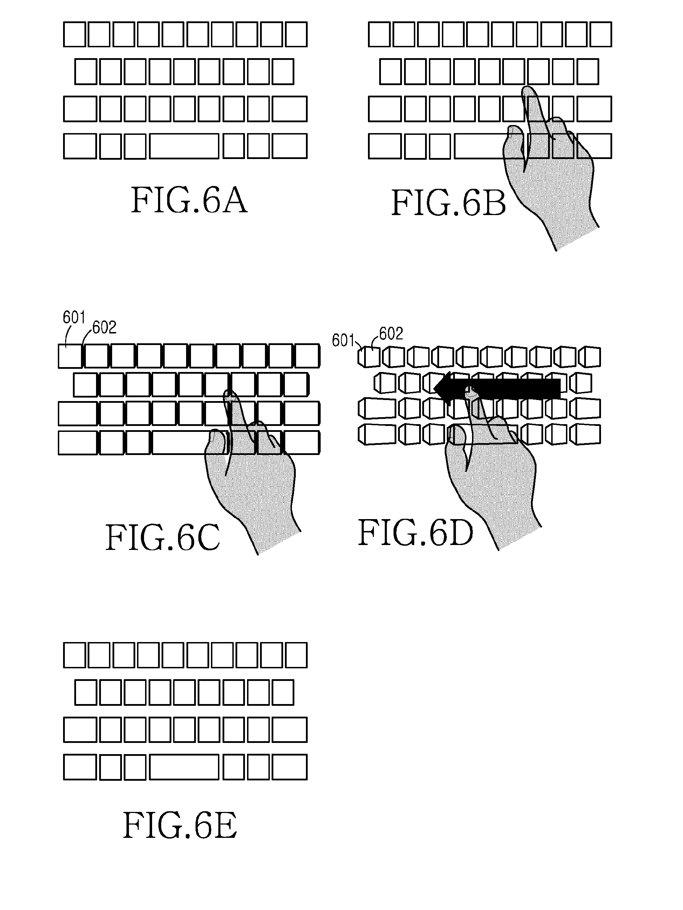

The embodiments that are described with reference to FIGs 2A to 5E may be applied to when the numbers and arrangements of buttons of the first and the second keyboards are the same or different. However, FIGs. 6A-6E illustrate an example according to another embodiment of the present invention where the numbers and arrangements of buttons of the first and the second keyboards are the same.

FIGs. 6A-6E illustrate a switch from a first keyboard to a second keyboard. For example, the first keyboard may be an English keyboard, and the second keyboard may be a number keypad.

Referring to FIGs. 6A-6E, the electronic device displays the first keyboard, as shown in FIG. 6A. Accordingly, a user may input a desired key value by using the first keyboard. If the user provides a tap input, as shown in FIG. 6B, 3D objects for each button which consists of surfaces corresponding to different keyboards are displayed, as shown in FIG. 6C. A key value for the first keyboard is allocated to one surface of the 3D object and key values for other keyboards including the second keyboard are allocated to other surfaces of the 3D object. Subsequently, as the user flicks to the left while maintaining the tap, as shown in FIG. 6D, the 3D objects also rotate to the left. In addition, the most widely projected surface of each 3D object is changed from a first surface 601 to a second surface 602 due to the rotation. Subsequently, if the tap is released, the second keyboard that is allocated is displayed on the second surface 602 that is most widely displayed at the time of release. Accordingly, the user may input a desired key value by using the second keyboard.

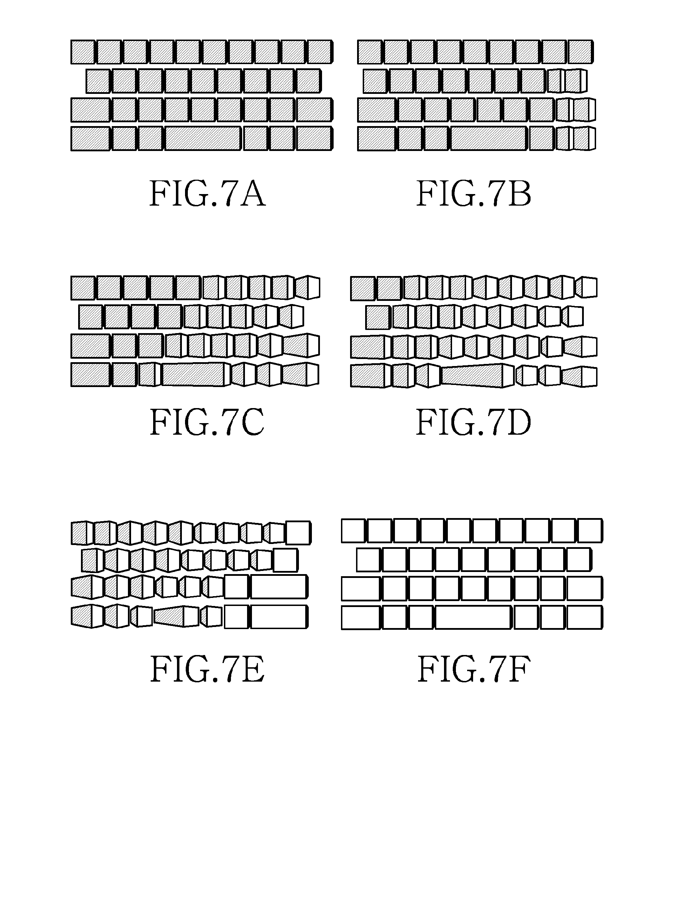

According to the embodiment of the present invention illustrated in FIGs. 6A-6E, each button is displayed as a 3D object. When each button is displayed as a 3D object, when a keyboard is switched, all 3D objects may rotate simultaneously or sequentially. For example, the 3D objects may sequentially rotate according to the direction of flicking. An embodiment of the present invention where the 3D objects sequentially rotate is described herein with reference FIGs. 7A-7F. FIGs. 7A-7F sequentially show how the keyboard is switched after a flicking input and release are performed. As shown in FIGs. 7A-7F, when flicking is performed to the left, the switch of the keyboard is sequentially performed while 3D objects rotate to the left, starting from buttons that are placed on the right side of the keyboard. The plurality of buttons (i.e. the 3D objects) sequentially rotates from the starting point of flicking to the ending point thereof for the switch of the keyboard. As such, the plurality of buttons rotates in the same direction and as a result, the switch of the keyboard is completed.

The above-described embodiments of the present enable the keyboard to be switched through the rotation of a polyhedron-shaped 3D object. However, embodiments of the present invention may also include switching entire keyboards as well as switching key values of keys themselves. In other words, the present invention may also be applied to a key other than a keyboard.

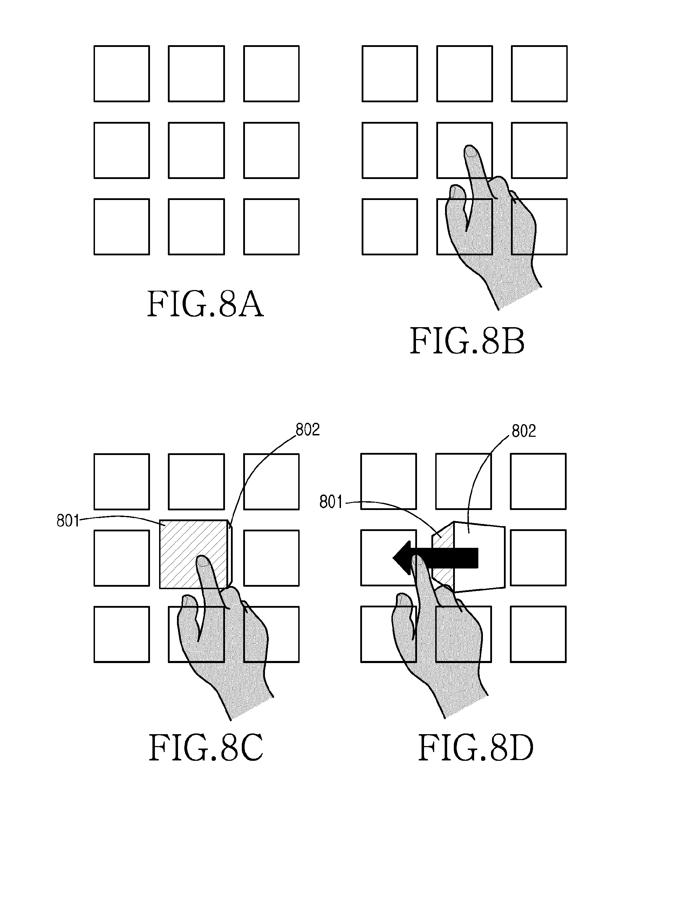

In particular, the virtual keyboard according to an embodiment of the present invention may include a soft button using a polyhedron-shaped 3D object that supports a toggle. For example, according to an embodiment of the present invention, each button is realized as a hexahedron shape, a main key value of the button is allocated to a first surface of six surfaces of the hexahedron, and other key values are allocated to four surfaces adjacent to the first surface and one surface that is the back surface of the first surface. Thus, as a user rotates the hexahedron, key values that are respectively allocated to six surfaces may be selectively input. Accordingly, when using the hexahedron, one button has up to six input values. Therefore, the button a number of the input values that is the same to the number of surfaces of the 3D object. In this example, flicking between any points is used to rotate the 3D object for the button. Accordingly, the user may search and select key values allocated to the button without a separate time delay. An embodiment of the present invention where switch through the rotation of the 3D object is applied to the key is described as follows with reference to FIGs. 8A-8D.

FIGs. 8A-8D illustrate an example of switching a key value of a virtual keyboard in an electronic device according to an embodiment of the present invention. Referring to FIG. 8, the electronic device displays the keyboard, as shown in FIG. 8A. Accordingly, a user inputs a desired key value by using the keyboard. When the user taps a specific button, as shown in FIG. 8B, a 3D object corresponding to the button where the tap is performed is displayed. Different key values are allocated to surfaces of the 3D object, and a first surface 801, to which a key value displayed from the first keyboard is allocated, is most widely displayed (i.e., the first surface 801 is displayed with a greater display area than other surfaces of the 3D object). Subsequently, as the user flicks to the left while maintaining the tap, as shown in FIG. 8D, the 3D object also rotates to the left. In addition, a second surface 802 becomes the most widely projected surface of the 3D object due to the rotation. Subsequently, if the tap is released, the key value that is allocated to the most widely displayed surface at the time of release is input and processed.

As shown in FIGs. 8A-8D, different key values may be allocated to surfaces of a button that is realized as a 3D object. Accordingly, in an electronic device according to an embodiment of the present invention, a button for inputting any key value may be realized as a 3D polyhedron and not as a 2D plane and functions to rotate the polyhedron and input each key value allocated to each surface may be provided. Thus, embodiments of the present invention provide functions to allocate a plurality of key values (for example, up to six key values in the case of a hexahedron) to a single button object and to enable the user to select and input the key values.

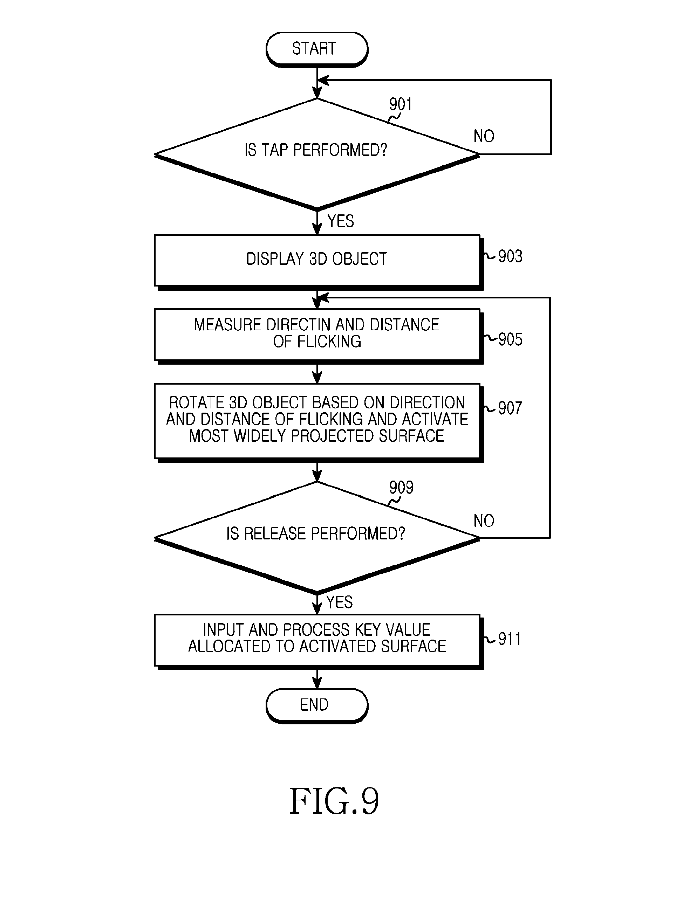

A method performed by the electronic device for the embodiment of the present invention illustrated in FIGs. 8A-8D is described as follows with reference to FIG. 9. FIG. 9 is a flowchart illustrating a method of the electronic device according to an embodiment of the present invention.

Referring to FIG. 9, the electronic device determines whether the user provides a tap input, in step 901. More specifically, the electronic device determines whether there is a tap input in order to determine whether there is a command for displaying a 3D object. As another example in accordance with embodiments of the present invention, the command for displaying the 3D object may be a tap that is maintained at a point for a time that is at least equal to a certain critical time.

If the tap is performed, the electronic device proceeds to step 903 and displays the 3D object corresponding to the button where the tap is performed. The 3D object has a plurality of surfaces. For example, the 3D object may be a hexahedron. The 3D object has a shape of a polyhedron to surfaces of which different key values are allocated. The different key values may be key values for different languages or key values for the same language.

Subsequently, the electronic device proceeds to step 905 and measures the direction and distance of flicking performed by user's operation. More specifically, the electronic device measures a moving vector and a moving distance by a movement of a pointing point. If the flicking is not performed or the pointing point does not move from the initial tapping point, the vector does not exist and the measures distance is zero.

Subsequently, in step 907, the electronic device rotates the 3D object based on the direction and distance of the flicking, and activates the most widely projected surface. For example, the rotation direction of the 3D object matches with the direction of the flicking and the rotation angle may be proportional to the distance of the flicking. In addition, the electronic device may be visualized to distinguish the most widely projected surface from other surfaces, which enables a user to recognize an activated surface. For example, the most widely projected surface may be displayed by using a change in color, shade, etc.

Subsequently, in step 909, the electronic device determines whether a release of the tap input is performed. If the release is not performed, the electronic device repetitively performs steps 905 and 907.

If the release is performed, in step 911, the electronic device inputs and processes a key value allocated to the activated surface. In other words, the electronic device inputs and processes the key value that is allocated to the surface activated at the time of release.

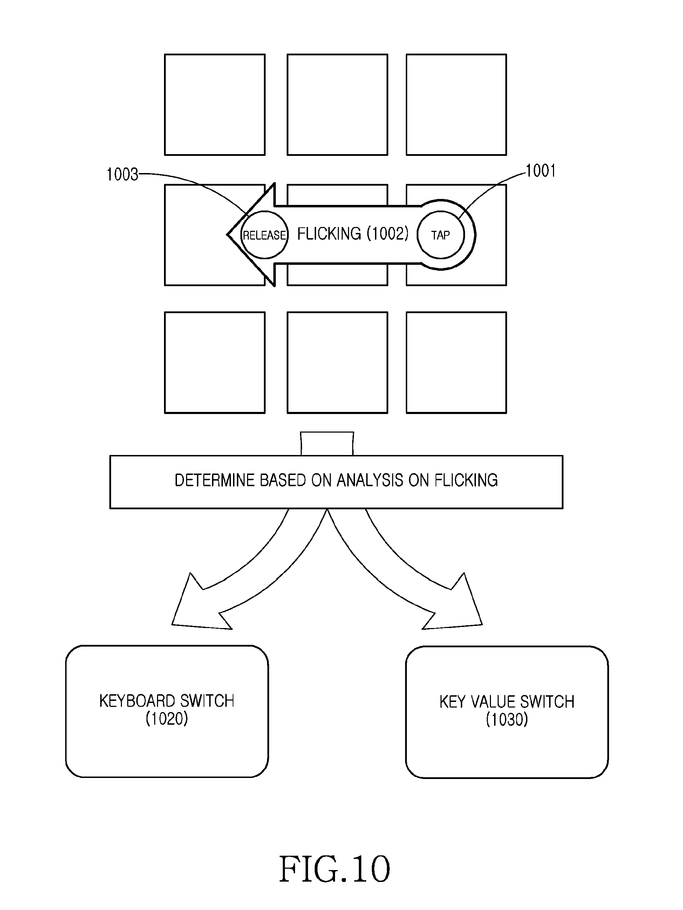

As described above, a switch technique using the rotation of a 3D object may be applied to the switch of a keyboard or the switch of a key value. In addition, according to another embodiment of the present invention, the electronic device may provide both the keyboard switch and the key value switch by using the rotation of the 3D object. According to an embodiment of the present invention, the electronic device may analyze flicking performed by the user conforming to a predefined criterion to provide one of the keyboard switch and the key value switch. Another embodiment of the present invention where both the keyboard switch and the key value switch are provided is described as follows with reference to FIG. 10.

FIG. 10 is a diagram illustrating an example of simultaneously switching a virtual keyboard and switching a key value in an electronic device according to an embodiment of the present invention. Referring to FIG. 10, while the keyboard is displayed, a user provide a tap input 1001, flicks in a direction indicated by arrow 1002 and inputs a tap release 1003 (i.e., the user ends the tap input). Accordingly, the electronic device analyzes the distance and time of the flicking 1002 performed by the user, and determines, based on the result of the analysis, whether to perform a keyboard switch 1020 or perform a key value switch 1030.

A rule for determining whether to perform the key value input 1030 from the keyboard switch 1020 may be defined in various ways. For example, the rule may be based upon the time interval between the tap 1001 and the release 1003. In particular, if flicking is performed from a 3D object corresponding to a specific button to a 3D object corresponding to another button within a predefined time, the electronic device can sense the direction of the flicking and perform a mode switch for all objects. Accordingly, both the key value switch and the keyboard switch are easily supported, and as a result, it is convenient to input multiple languages. For example, a critical value of the time interval may be less than or equal to 0.3 second. A particular value of the time interval may be defined as a proper value in consideration of a user experience (UX) environment.

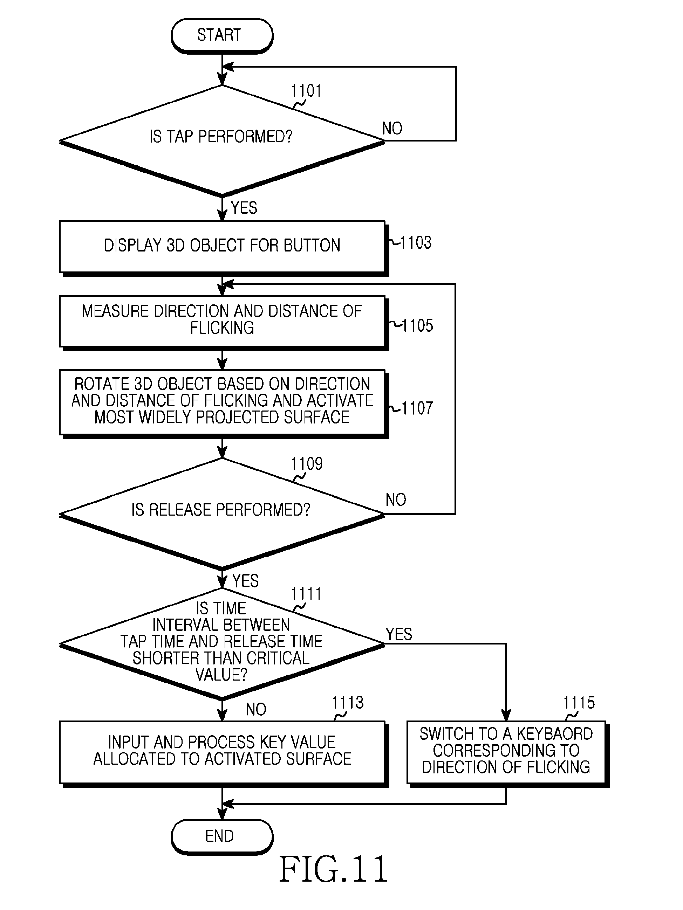

A method performed by an electronic device according to the embodiment of the present invention described with reference to FIG. 10 is described as follows with reference to FIG. 11. FIG. 11 illustrates a method performed by an electronic device according to an embodiment of the present invention.

Referring to FIG. 11, the electronic device determines whether the user provides a tap input, in step 1101. By determining whether a tap is input, the electronic device determines whether there is a command for displaying a 3D object. As another example according to another embodiment of the present invention, the command for displaying the 3D object may be a tap that is maintained at a point for a time that is at least equal to a certain critical time.

If the tap is performed, in step 1103, the electronic device displays the 3D object for the button where the tap is performed. The 3D object has a plurality of surfaces. For example, the 3D object may be a hexahedron. The plurality of surfaces corresponds to different key values, respectively. For example, the 3D object may have a shape of a polyhedron to surfaces of which different key values are allocated. The different key values may be key values for different languages or for the same language.

Subsequently, in step 1105, the electronic device measures the direction and distance of flicking performed by user's operation. That is, the electronic device measures a moving vector and a moving distance by a movement of a pointing point. If the flicking is not performed or the pointing point does not move from the initial tapping point, the vector does not exist and the distance is zero.

Subsequently, the electronic device proceeds to step 1107, rotates the 3D object based on the direction and distance of the flicking, and activates the most widely projected surface. For example, the rotation direction of the 3D object may match the direction of the flicking and the rotation angle may be proportional to the distance of the flicking. In addition, the electronic device may be visualized to distinguish the most widely projected surface from other surfaces, which enables a user to recognize an activated surface. For example, the most widely projected surface may be displayed by using a change in color, shade, etc.

Subsequently, in step 1109, the electronic device determines whether a release of the tap input is performed. If the release is not performed, the electronic device repetitively performs steps 1105 and 1107.

If the release is performed, in step 1111, the electronic device determines whether the time interval between the tap time and the release time is shorter than a predefined critical value. More specifically, the electronic device calculates the time interval between the tap performed at step 1101 and the release performed at step 1109 and compares the time interval with the critical value. Accordingly, the electronic device determines, based on the time interval, whether to process the tap-flicking-release as a keyboard switch or as a key value switch.

If the time interval is at least equal to the critical value, the electronic device proceeds to step 1113, inputs and processes a key value that is allocated to an activated surface. In other words, the electronic device determines to process the tap-flicking release as a key value switch, inputs and processes the key value that is allocated to the surface activated at the time of release.

However, if the time interval is shorter than the critical value, in step 1115, the electronic device switches to a keyboard corresponding to the direction of the flicking. More specifically, the electronic device determines to process the tap-flicking-release as a keyboard switch, and enables a keyboard allocated to a surface that corresponds to the direction of the release or that is connected to the side of the direction of the flicking on the surface initially activated when displaying a 3D object.

In addition to the keyboard switch and the key value switch that are described above, link operations that may be performed in accordance with embodiments of the present invention are described as follows.

According to an embodiment of the present invention, an electronic device allocates keyboards or key values to surfaces of a polyhedron-shaped 3D object. The allocation of the keyboards or the key values may be performed individually by a user selection or collectively by a user command. According to an embodiment of the present invention, values selected by a user are allocated to surfaces of the 3D object. For example, in order to allocate a key value, the user may drag a specific value from a text, activate that specific value, and then allocate that activated value to a specific surface of any button object from a popup window through an upper menu or a menu button. Such a type input may be performed through a user interface including a general menu button or popup menu. According to another embodiment of the present invention, characters for a specific language may be collectively allocated to any surface of a 3D object for a button. For example, if multiple languages are selected on a separate menu such as a setting menu, key values for a specific language may be collectively allocated to any surface (e.g., a surface connected to the left side of a visible surface) of each of button objects that configure an input means. Accordingly, if multiple languages need to be simultaneously input, the total text input time is significantly reduced, as there is no need for a user to separately change languages or input a switch mode key.

As described above, according to an embodiment of the present invention, an electronic device applies a 3D object idea to a button and a keyboard that are components of a key input environment that is related to a typical 2D plane idea. In addition, embodiments of the present invention allow the 3D object to respond to user flicking in real time and thus provide a user with a more analogue experience when inputting a key value. Furthermore, as compared to a typical system that has a single value per a single button, embodiments of the present invention enable multiple values allocated to each button to be quickly processed and thus allow a sentence to be input more efficiently and quickly. In particular, when inputting a document in which multiple languages and special characters are mixed, embodiments of the present invention enable use of characters corresponding to multiple languages or special characters and associated values allocated to each button object, without an additional process of changing a language mode by using a separate button, and thus may provide a user with a more convenient document writing environment.

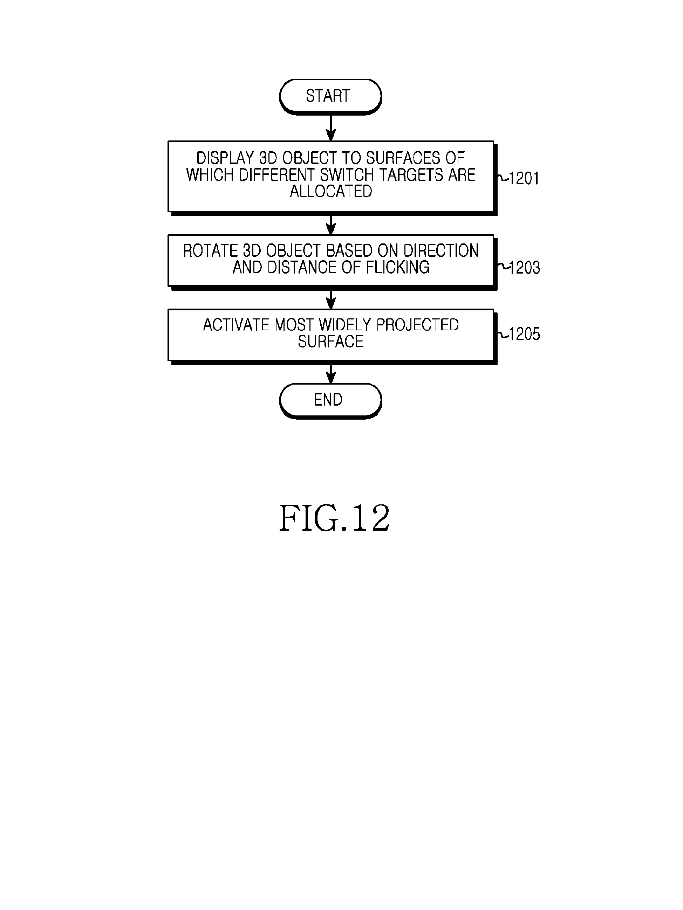

A method and configuration of an electronic device that provides the above-described virtual keyboard according to embodiments of the present invention is described as follows with reference to FIGs. 12-14.

FIG. 12 is a flow chart illustrating a method performed by an electronic device according to an embodiment of the present invention.

Referring to FIG. 12, the electronic device displays a 3D object having surfaces to which different switch targets are allocated, in step 1201. The 3D object has a shape of a polyhedron that has a plurality of surfaces. The switch target is an item related to a virtual keyboard selectable through the rotation of the 3D object, such as a keyboard type (e.g., Korean, English, number, or special character keyboards), or a key value. Although not shown in FIG. 12, the 3D object is displayed according to a predefined operation. For example, the predefined operation may be one of tapping a specific button for a time at least equal to a predefined time, performing a tap or flicking, tapping a point in a predefined region for a time equal to or longer than a predefined time, and pressing a predefined special button.

Subsequently, in step 1203, the electronic device rotates the 3D object according to the direction and distance of flicking. For example, the rotation direction of the 3D object may match with the direction of the flicking. In addition the angle of the rotation may increase according to an increase in the distance of the flicking. If flicking is not performed, the 3D object maintains a previously-displayed state.

Subsequently, the electronic device proceeds to step 1205 and activates one of a plurality of surfaces of the 3D object that is most widely projected. The most widely projected surface varies according to the rotation of the 3D object, and thus the activated surface also varies according to the rotation. The activated surface subsequently specifies a target selected as the last input when a user releases a tap. The electronic device may visually distinguish the most widely projected surface from other surfaces, which enables a user to recognize an activated surface. For example, the most widely projected surface may be distinguished from the other surfaces by using a change in color, shade, etc.

Although not shown in FIG. 12, the electronic device determines that a keyboard or a key value is selected as a release is performed. Accordingly, the selected keyboard may be used or the selected key value is input and processed. In particular, if the release is performed, the electronic device enables a keyboard allocated to a surface activated at the time of release or inputs and processes a key value allocated thereto. In this case, when the keyboard is switched, a UI for switching the keyboard may be the same as any of FIGs, 2A-2E, 4A-4F, 5A-5E, 6A-6E, or 7A-7F. Alternatively, when the key value is switched, a UI for switching the key value may be the same as FIGs. 8A-8D.

In addition, although not shown in FIG. 12, the electronic device may determine, based on a result of analyzing the flicking of a user, whether there is key value switch or keyboard switch. For example, the electronic deice may determine that an input corresponds to one of a key value switch and a keyboard switch based on the time interval between a tap time resulting in the 3D object being displayed and a release time since flicking.

In order to perform the procedures as shown FIG. 12, the electronic device may include a first unit that has a function corresponding to step 1201, a second unit that has a function corresponding to step 1203, and a third unit that has a function corresponding to step 1205.

The method described above in relation with FIG. 12 under of the present invention may be provided as one or more instructions in one or more software modules, or computer programs stored in an electronic device including a portable terminal.

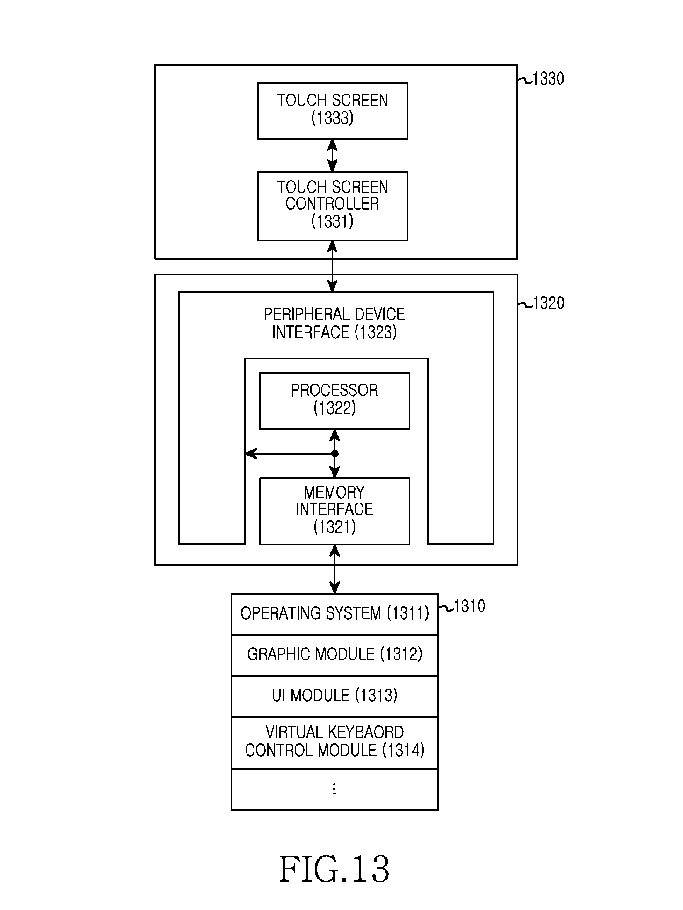

FIG. 13 is a block diagram illustrating an electronic device according to an embodiment of the present invention. The present invention may be implemented in an electronic device including a portable terminal such as, for example, a smart phone and a mobile telecommunication terminal. Hereunder, a portable terminal is used as an example for the electronic device.

Referring to FIG. 13, the electronic device includes a memory 1310, a processor unit 1320, and an input and output system 1330. The memory 1310 may include a plurality of memories.

The components of the electronic device of FIG. 13 may be combined by at least one communication bus (now shown) or a stream line (not shown).

The memory 1310 is connected to a memory interface 1321. The memory 1310 may include at least one of at least one high-speed Random Access Memory (RAM) such as a magnetic disc storage device, a non-volatile memory, at least one optical storage device, and a flash memory (for example, NAND, NOR, etc.).

The memory 1310 stores at least a piece of software. Software components include an operating system module 1311, a graphic module 1312, and a user interface module 1313. In particular, according to an embodiment of the present invention, the memory 1310 includes a virtual keyboard control module 1314. The module that is the software component may be a set of commands, and the module may be referred to as a 'command set' or a 'program'. At least one module that includes commands to perform a method according to an embodiment of the present invention may be stored in the memory 1310.

The operating system module 1311 includes at least one software component that controls a general system operation. For example, the operating system module 1311 may be an embedded operating system such as WINDOWS, LINUX, Darwin, RTXC, UNIX, OS X, and VxWorks. For example, control of the general system operation includes memory management and control, stored hardware control and management, power control and management, etc. The operating system module 1311 enables smooth communication between at least a piece of hardware and at least one software component. The graphic module 1312 includes at least one software component for providing and displaying graphics on a touch screen 1333. In this case, the graphics include texts, web pages, icons, digital images, videos, and animation. The user interface module 1313 includes at least one software component regarding a user interface. Matters regarding the user interface include how a state of the user interface changes or under which condition the state of the user interface changes.

The virtual keyboard control module 1314 displays a virtual keyboard and includes at least one software component for processing a key value. In particular, the virtual keyboard control module 1314 includes at least one software component for supporting keyboard switch or key value switch for each button by using a 3D object. For example, the virtual keyboard control module 1314 includes at least one software component for performing keyboard switch as shown in FIGs. 2A-2E, 4A-4F, 5A-5E, 6A-6E, or 7A-7F, key value switch as shown in FIG. 8, or selective switch of a keyboard and a key value as shown in FIG. 10.

The memory 1310 may include a further module other than the above-described modules 1311 to 1314. Alternatively, according to another embodiment of the present invention, some of the above-described modules 1311 to 1314 may be omitted.

The processor unit 1320 includes a memory interface 1321, a processor 1322, and a peripheral device interface 1323. The processor 1322 may include at least one hardware chip. Depending on the situation, the processor unit 1320 itself may be referred to as a 'processor'. The memory interface 1321, the processor 1322, and the peripheral device interface 1323 may be separate components respectively or may be included in at least one integrated circuit.

The processor 1322 executes a software program to enable the electronic device to perform a function corresponding to the software program and performs processing and control for voice communication and data communication. In addition, the processor 1322 executes a software module stored in the memory 1310 to perform a specific function corresponding to that module. That is, the processor 1322 performs a method according to an embodiment of the present invention in linkage with the software module stored in the memory. The processor 1322 may include at least one data processor and an image processor. The data processor and the image processor may be configured as separate hardware. In addition, the processor 1322 may be configured as a plurality of processors that perform different functions.

The input and output system 1330 includes a touch screen controller 1331 and a touch screen 1333. The touch screen controller 1331 may be combined with the touch screen 1333. The touch screen 1333 and the touch screen controller 1331 detect contact, motion, or the interruption of the contact and the motion, by using capacitive, resistive, infrared and surface acoustic wave technologies for determining at least one contact point on the touch screen 1333 as well as a multi-touch sensing technology, but the present invention is not limited thereto, and other such technologies may be used in accordance with embodiments of the present invention.

The touch screen 1333 provides an input/output interface between the electronic device and a user. That is, the touch screen 1333 delivers a touch input from the user to the electronic device. In addition, the touch screen 1333 is a medium for showing the user an output from the electronic device. More specifically, the touch screen 1333 shows the user a visual output. The visual output is represented through texts, graphics, videos, and combinations thereof, for example. In particular, the touch screen 1333 displays a UI that performs keyboard switch or key value switch through the rotation of a 3D object according to an embodiment of the present invention. The touch screen 1333 may be referred to as a 'display unit' because it may provide a visual output.

Various display means may be used for the touch screen 1333. For example, the touch screen 1333 may include at least one of a Liquid Crystal Display (LCD), a Light Emitting Diode (LED), a Laser Phosphor Display (LPD), an Organic LED (OLED), an Active-Matrix OLED (AMOLED), and a Flexible LED (FLED), but embodiments of the present invention are not limited thereto.

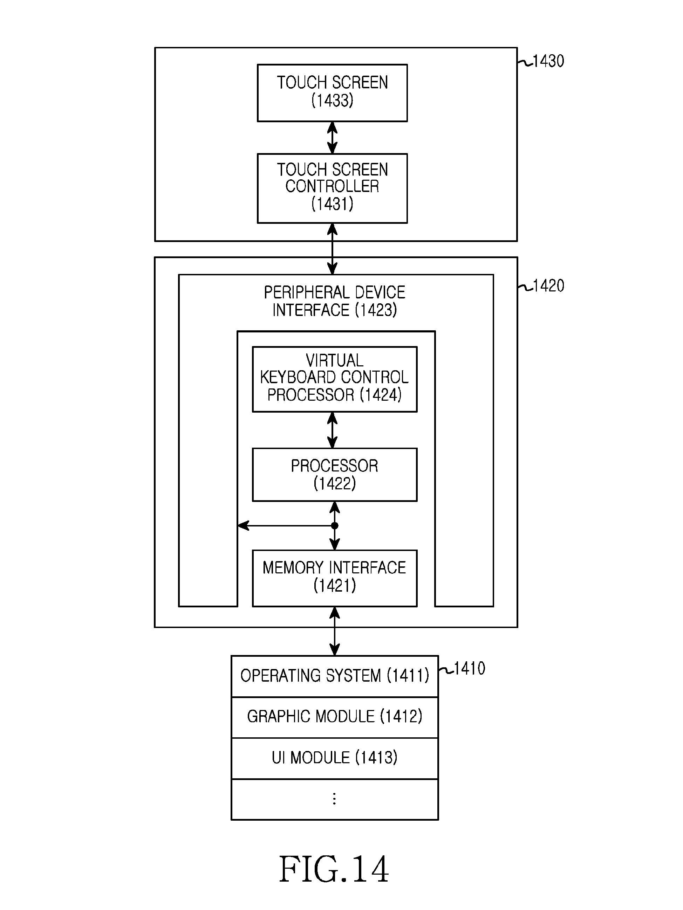

FIG. 14 is a block diagram illustrating an electronic device according to another embodiment of the present invention. The present invention may be implemented in an electronic device including a portable terminal such as, for example, a smart phone and a mobile telecommunication terminal. Hereunder, a portable terminal is used as an example for the electronic device.

Referring to FIG. 14, the electronic device includes a memory 1410, a processor unit 1420, and an input and output system 1430. The memory 1310 may be plural. The components of FIG. 14 are similar to corresponding components of FIG. 13, with the exception of the addition of a virtual keyboard control processor 1424 and removal of the virtual keyboard control module 1314 in FIG. 13. For convenience, a further description of components in FIG. 14 corresponding to components in FIG. 13 is omitted.

Referring to FIG. 14, the processor unit 1420 may include a memory interface 1421, a processor 1422, and a peripheral device interface 1423, and a virtual keyboard control processor 1424. The processor 1422 executes a software program to enable the electronic device to perform a function corresponding to the software program and performs processing and control for voice communication and data communication. In addition, the processor 1422 executes a software module stored in the memory 1410 to perform a specific function corresponding to that module. The processor 1422 may include at least one data processor and an image processor. The data processor and the image processor may be configured as separate hardware. In addition, the processor 1422 may be configured as a plurality of processors that performs different functions. For example, the virtual keyboard control module 1424 performs keyboard switch as shown in FIGs. 2A-2E, 4A-4F, 5A-5E, 6A-6E, or 7A-7F, key value switch as shown in FIGs. 8A-8D, or selective switch of a keyboard and a key value as shown in FIG. 10.

Embodiments of the present invention may provide a user with a more user-friendly experience by changing a key value or a keyboard type according to the rotation of a 3D object in an electronic device that supports a virtual keyboard.

Embodiments of the present invention according to the claims and description in the specification can be realized in the form of hardware, software or a combination of hardware and software.

Such software may be stored in a computer readable storage medium. The computer readable storage medium stores one or more programs (software modules), the one or more programs comprising instructions, which when executed by one or more processors in an electronic device, cause the electronic device to perform methods of the present invention.

Such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disc (CD), Digital Video Disc (DVD), magnetic disk or magnetic tape or the like. It will be appreciated that the storage devices and storage media are embodiments of machine-readable storage that are suitable for storing a program or programs comprising instructions that, when executed, implement embodiments of the present invention. Embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the invention has been shown and described with reference to certain embodiments thereof, it will be understood by those skilled in the art that various changes in form and details may be made therein without departing from the spirit and scope of the invention as defined by the appended claims. Therefore, the scope of the invention is defined not by the detailed description of the invention but by the appended claims and their equivalents, and all differences within the scope are to be construed as being included in the present invention.

## Claims

1. A method of an electronic device, the method comprising:
displaying a three-dimensional (3D) object in a shape of a polyhedron having surfaces to which different switch targets are respectively allocated;
rotating the 3D object according to a direction and distance of an input flicking; and
activating, in response to the rotation of the 3D object, one of surfaces of the polyhedron that is most widely projected.

2. The method of claim 1, wherein displaying the 3D object comprises displaying the 3D object when an operation for displaying the 3D object is performed, and
wherein the operation for displaying the 3D object is one of receiving input of a tap, input of a tap and flicking, input of maintaining a tap at a same point for a time at least equal to a predetermined time, input of maintaining a tap within a predefined region, and an input corresponding to a button defined for displaying the 3D object.

3. The method of claim 1, further comprising determining that a switch target allocated to a surface activated at a time of release is selected, when the release is performed.

4. The method of claim 1, wherein the switch target is a keyboard type and rotating the 3D object comprises rotating one 3D object to surfaces of which different keyboard types are respectively allocated.

5. The method of claim 1, wherein the switch target is a keyboard type and rotating the 3D object comprises equally rotating 3D objects corresponding to buttons and having surfaces to which key values of different keyboard types are respectively allocated.

6. The method of claim 1, wherein the switch target is a keyboard type and rotating the 3D object comprises sequentially rotating 3D objects that are buttons, located from a starting point of the flicking toward an ending point of the flicking.

7. The method of claim 1, wherein the switch target is a key value and rotating the 3D object comprises rotating one 3D object having surfaces to which different key values are respectively allocated.

8. The method of claim 1, further comprising determining whether to perform one of a keyboard switch and a key value switch according to a predefined rule by using a result of an analysis of the flicking.

9. The method of claim 8, wherein determining whether to perform one of the keyboard switch and the key value switch according to the predefined rule comprises comparing a time interval between a tap indicating a start of the flicking and release indicating an end of the flicking with a predefined critical value.

10. The method of claim 1, further comprising visually distinguishing the activated surface from other surfaces of the 3D object.

11. An electronic device arranged to implement a method of one of claims 1 to 10.

12. An electronic device, the electronic device comprising:
at least one processor;
a memory operating with a clock frequency provided from the at least one processor; and
at least one module in the memory, wherein the module is configured to store at least one command to be performed by the at least one processor, and the module stores at least one command to display a three-dimensional (3D) object in a shape of a polyhedron having surfaces to which different switch targets are respectively allocated, to rotate the 3D object according to a direction and distance of an input flicking, and to activate, in response to the rotation of the 3D object, one of surfaces of the polyhedron that is most widely projected.

13. The electronic device of claim 12, wherein the module stores a command to display the 3D object when an operation for displaying the 3D object is performed, and
wherein the operation predefined for displaying the 3D object is one of receiving input of a tap, input of a tap and flicking, input of maintaining a tap at a same point for a time at least equal to a predetermined time, input of maintaining a tap within a predefined region, and an input corresponding to a button defined for displaying the 3D object.

14. The electronic device of claim 12, wherein the module determines that a switch target allocated to a surface activated at a time of release is selected when the release is performed.

15. The electronic device of claim 12, wherein the switch target is a keyboard type and the module rotates one 3D object to surfaces of which different keyboard types are respectively allocated
